# EUROPÄISCHE PATENTANMELDUNG

(11) **EP 3 043 456 A1**
(43) Veröffentlichungstag der Anmeldung: **13.07.2016**
(21) Anmeldenummer: 15150163.2
(22) Anmeldetag: 06.01.2015
(51) Int. Cl.: H02K 15/04, H02K 3/12

(54) **Verfahren zur Herstellung eines Stator- oder Rotorelements für eine elektrische Maschine**

(71) Anmelder: Micamation AG, 8108 Dällikon (CH)
(72) Erfinder: Schwander, Roger, 6006 Luzern (CH)
(74) Vertreter: Rutz, Andrea

(57) **Zusammenfassung**

Es wird Verfahren zur Herstellung eines Stator- oder Rotorelements für eine elektrische Maschine angegeben. Dabei werden Spulen (3) bereitgestellt mit jeweils zwei Spulenlängsseiten (33) und zwei Spulenstirnseiten (32), die gemeinsam eine Spulenöffnung (34) begrenzen. Die Spulenlängsseiten (33) werden mit Isolationsband (38) umwickelt und dann derart in die Längsnuten (43) des Kerns (41) eingesetzt, dass in jeder Längsnut (43) zumindest eine Spulenlängsseite (33) von einer dieser Spulen (3) aufgenommen ist. Nach dem Umwickeln und vor dem Einsetzen in die Längsnuten (43) des Kerns (41) werden die Spulen (3) jeweils derart im Bereich ihrer Spulenstirnseiten (32) umgebogen, dass sich die beiden Spulenlängsseiten (33) jeweils via eine Drehbewegung einander annähern.

## Beschreibung

### TECHNISCHES GEBIET

Die vorliegende Erfindung betrifft ein Verfahren zur Herstellung eines Stator- oder Rotorelements für eine elektrische Maschine sowie ein entsprechend hergestelltes Stator- oder Rotorelement einer elektrischen Maschine. Bei der elektrischen Maschine kann es sich insbesondere um einen Stromgenerator oder einen Elektromotor handeln.

### STAND DER TECHNIK

Stromgeneratoren und Elektromotoren weisen üblicherweise als Stator einen Eisenkern mit einer Vielzahl von Zähnen und dazwischen angeordneten Längsnuten auf, in welche Spulen mit elektrischen Leitern, meist Flachdrähten, eingesetzt sind. Die Spulen umgeben dabei jeweils einen oder mehrere Zähne des Eisenkerns, um im Betrieb mittels eines magnetischen Flusses im Eisenkern eine induktive Wechselwirkung mit einem im Statorinneren angeordneten Rotor zu ermöglichen.

Statoren von elektrischen Maschinen, welche jeweils einen Eisenkern aufweisen, der Längsnuten mit einer Vielzahl von darin eingesetzten Spulen aufweist, sind beispielsweise in der US 2009/0072653 A1 und in der US 2010/0164319 A1 offenbart.

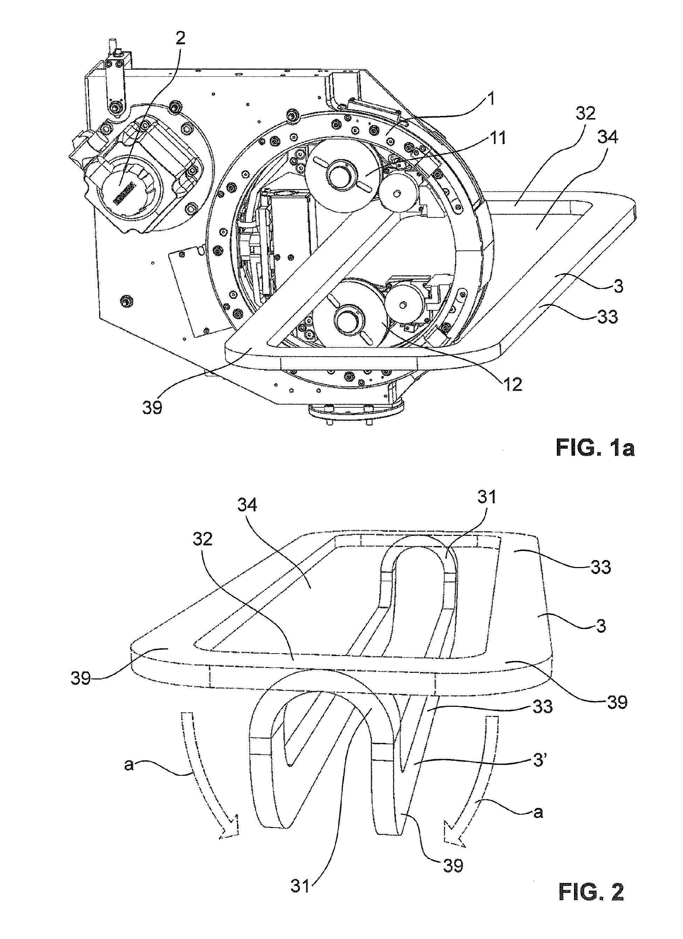

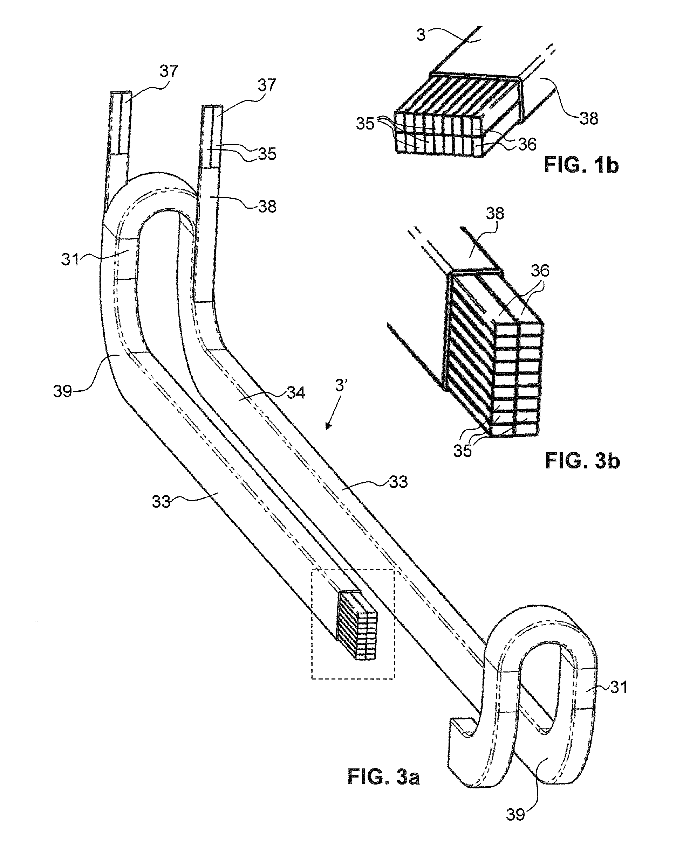

Zur Gewährleistung der Funktion des Stromgenerators bzw. Elektromotors und zur Vermeidung von Kurzschlussströmen, sind die Spulen von Stromgeneratoren und Elektromotoren jeweils mit einem Isolationsband umwickelt. Eine qualitativ hochwertige Isolation der Spulen ist im Hinblick auf die Qualität und die Langlebigkeit der elektrischen Maschine entscheidend. Um eine regelmässige Umwicklung der Spulen mit genau vorbestimmbaren Wickelparametern wie Bandwinkel, Bandzug, Überlappung etc. zu gewährleisten und die Umwicklung gleichzeitig innert möglichst kurzer Zeit und mit minimalem Aufwand durchführen zu können, werden die Spulen bevorzugt maschinell umwickelt. Hierzu wird die Spule in die Halterung einer Isolationsmaschine eingesetzt und anschliessend zumindest in denjenigen Bereichen, welche später in die Längsnuten des Eisenkerns zu liegen kommen, im Wesentlichen vollautomatisch mit Isolationsband umwickelt. Dabei rotieren an einem Wickelring gehaltene Bandrollen um die zu isolierenden Spulenabschnitte. Falls die Spule eine geschlossene Schleife bildet mit einer seitlich umlaufend begrenzten Spulenöffnung, wie dies bei den meisten Spulen der Fall ist, wird der Wickelring durch die Spulenöffnung geführt, so dass die Bandrollen während der Rotation durch diese hindurch geführt werden können. Siehe hierzu auch die Figur 1.

Um eine effiziente maschinelle Umwicklung mittels eines Wickelringes und daran angebrachten Bandrollen zu ermöglichen, muss die Spulenöffnung eine gewisse minimale Dimensionierung haben. Bei einer zu kleinen Spulenöffnung könnte der Wickelring inkl. Bandrollen nicht mehr durch die Öffnung hindurch geführt werden, oder es müsste eine Bandrolle mit sehr kleinem Durchmesser verwendet und nach dem vollständigen Abrollen jeweils mit einer neuen Rolle ersetzt werden. Aus diesem Grund können nur Spulen ab einer gewissen Minimalgrösse auf effiziente Art und Weise maschinell isoliert werden. Bei verhältnismässig klein dimensionierten Stromgeneratoren bzw. Elektromotoren mit entsprechend kleinen Spulen muss die Spulenisolation entweder auf mühsame und kostenintensive Weise mittels einer meist langsam arbeitenden Spezialmaschine oder sogar von Hand vorgenommen werden, oder es muss eine abgeänderte und somit suboptimale Konfiguration der elektrischen Maschine, zum Beispiel mit grossen, einander überlappenden Spulen, gewählt werden. Zur Aufnahme des Magnetflusses bedingen breitere und einander überlappende Spulen jedoch eine grössere Dimensionierung des Eisenkerns, wodurch das Gewicht und der Preis der elektrischen Maschine deutlich erhöht werden.

Beispiele von Statoren mit einander überlappenden Spulen sind in der US 2011/0266911 A1, der US 2010/0066196 A1 und der US 2012/0169058 A1 offenbart. Alternativ kann der Herstellungsprozess der Spulen auch derart verändert werden, dass die Spulen anschliessend an den Isolationsvorgang seitlich zusammengepresst bzw. in Längsrichtung auseinandergezogen werden, so dass sich die Spulenöffnung entsprechend verkleinert. Aufgrund der in der Spule enthaltenen Flachdrähte, welche typischerweise flach in der Spulenebene liegen, ist eine derartige Spulenverformung jedoch nur mit einem hohen Kraftaufwand möglich. Ausserdem werden die Flachdrähte während der Spulenverformung in ihren radial innen angeordneten Bereichen gestaucht und tendieren dort dazu, aus ihrer Ebene heraus zu bauchen. Eine derartige Spulenverformung kann daher nur innerhalb bestimmter Grenzen und mit einem erheblichen Zusatzaufwand vorgenommen werden.

### DARSTELLUNG DER ERFINDUNG

Es ist also eine Aufgabe der vorliegenden Erfindung, ein Verfahren zur Herstellung eines Stator- oder Rotorelements für eine elektrische Maschine anzugeben, welches auch dann eine maschinelle Umwicklung der Spulen mit Isolationsband ermöglicht, wenn für das Stator- bzw. Rotorelement Spulen mit einer verhältnismässig kleinen Spulenöffnung benötigt werden. Zur Lösung dieser Aufgabe wird ein Verfahren vorgeschlagen, wie es in Anspruch 1 angegeben ist. Ausserdem wird in Anspruch 15 ein Stator- oder Rotorelement einer elektrischen Maschine angegeben, welches insbesondere gemäss einem derartigen Verfahren hergestellt ist. Vorteilhafte Ausgestaltungen der Erfindung sind in den abhängigen Ansprüchen angegeben.

Die vorliegende Erfindung stellt also ein Verfahren zur Herstellung eines Stator- oder Rotorelements für eine elektrische Maschine zur Verfügung. Das erfindungsgemäss hergestellte Stator- oder Rotorelement weist einen Kern, üblicherweise einen insbesondere zumindest teilzylinderförmigen Eisenkern, mit Längsnuten auf, in welche jeweils zumindest eine Spulenlängsseite einer Spule eingesetzt ist. Das Verfahren umfasst zumindest die folgenden Schritte:
- Bereitstellen von Spulen mit jeweils zwei Spulenlängsseiten und zwei Spulenstirnseiten, die gemeinsam eine Spulenöffnung begrenzen;
- Umwickeln, insbesondere maschinelles Umwickeln, der Spulenlängsseiten mit Isolationsband;
- Einsetzen der Spulenlängsseiten dieser Spulen in die Längsnuten des Kerns derart, dass in jeder Längsnut zumindest eine Spulenlängsseite von einer dieser Spulen aufgenommen ist. Nach dem Umwickeln ihrer Spulenlängsseiten und vor dem Einsetzen in die Längsnuten des Kerns werden die Spulen mit Isolationsband jeweils derart im Bereich ihrer Spulenstirnseiten umgebogen, dass sich die beiden Spulenlängsseiten jeweils via eine Drehbewegung einander annähern.

In der Regel werden die Spulenstirnseiten der Spulen also jeweils um eine Achse herum verbogen, welche sich im Wesentlichen parallel zu den Längsrichtungen der Spulenlängsseite erstreckt. Beim Umbiegen der Spulen entstehen dadurch in der Regel jeweils Spulenköpfe, welche sich in eine ungefähr senkrecht zu den Spulenlängsseiten stehende Richtung erstrecken. Die Spulen weisen somit jeweils eine Spulenöffnung auf, welche vor dem Umbiegen und somit während dem Umwickeln mit Isolationsband eine grössere Dimension hat, als nach dem Umbiegen. Auf diese Weise kann dank der verhältnismässig breiten Spulenöffnung vor dem Umbiegen eine maschinelle und somit qualitativ hochwertige und schnelle Umwicklung der Spulenlängsseiten erfolgen. Es kann insbesondere ein Isolationsband mit einem verhältnismässig grossen Durchmesser durch die Spulenöffnung hindurchgeführt werden, so dass die gesamte Umwicklung einer Spulenlängsseite oder sogar beider Spulenlängsseiten mit einer minimalen Anzahl von Isolationsbändern, insbesondere einem einzigen Isolationsband, durchgeführt werden kann. Nach dem Umbiegen ist die Spulenöffnung dann deutlich verkleinert, und die Spulenlängsseiten sind dann derart in einem geringeren Abstand zueinander angeordnet, dass die Spule in die Längsnuten des Kerns eingesetzt werden kann. Es können somit auch Spulen maschinell umwickelt werden, die bei Stator- bzw. Rotorelementen zum Einsatz kommen, bei denen eine verhältnismässig kleine Spulenöffnung benötigt wird. Dies ermöglicht eine maschinelle Spulenumwicklung insbesondere auch bei kleinen Motoren bzw. Generatoren. Da die Spulen derart umgebogen werden, dass sich die Spulenlängsseiten dabei jeweils via eine Drehbewegung einander annähern, kann das Umbiegen insbesondere in Fällen, bei denen die Spulenlängs- und Spulenstirnseiten einen rechteckigen Querschnitt aufweisen, der flach in der Spulenebene liegt, mit einem verhältnismässig moderaten Kraftaufwand bewerkstelligt werden. Ein Umbiegen der Spulenstirnseiten derart, dass die Spule aus ihrer ursprünglichen Spulenebene hinaus gebogen wird, ist mit den üblichen Biegevorrichtungen zudem einfacher zu bewerkstelligen als ein Aufbiegen der Spule innerhalb der Spulenebene.

Bei der elektrischen Maschine handelt es sich üblicherweise um einen Elektromotor oder einen Stromgenerator. Im Falle eines Elektromotors kann es sich zum Beispiel um einen Schiffsantriebsmotor oder einen insbesondere getriebelosen Mühlenantrieb handeln. Falls die elektrische Maschine ein Stromgenerator ist, kann dieser insbesondere für den Einsatz als Windturbine oder als Hydrogenerator in einem Wasserkraftwerk ausgelegt sein.

Beim Stator- oder Rotorelement kann es sich um einen vollständigen Stator oder Rotor mit einem zylinderförmigen Kern handeln. Es kann sich aber auch um ein Segment eines Stators oder Rotors handeln, welches einen nur teilzylinderförmigen Kern aufweist. Dies kann insbesondere bei sehr grossen Anlagen vorteilhaft sein, da die einzelnen Segmente dann separat voneinander hergestellt und transportiert werden können, um dann erst am endgültigen Einsatzort zu einem vollständigen Stator bzw. Rotor zusammengesetzt zu werden.

Die Längsnuten des Kerns erstrecken sich in der Regel in die axiale Richtung bzw. Längsrichtung des Kerns und üblicherweise über dessen gesamte Länge. Zwischen den Längsnuten, welche meist in regelmässigen Abständen entlang der Umfangsrichtung des Stator- bzw. Rotorelements angeordnet sind, sind üblicherweise Zähne vorgesehen, welche die Längsnuten entlang der Umfangsrichtung begrenzen. In der Regel werden in sämtliche Längsnuten des Stator- bzw. Rotorelements ausschliesslich Spulen eingesetzt, welche nach dem Umwickeln mit Isolationsband wie angegeben in den Bereichen ihrer Spulenstirnseiten umgebogen wurden. Die Längsnuten werden vorteilhaft jeweils vollständig mit den Längsseiten von derartigen Spulen aufgefüllt, so dass ein möglichst grosser Füllgrad erreicht wird.

Die Spulen bilden üblicherweise jeweils eine umlaufend geschlossene Schleife. Während die Spulenlängsseiten meistens eine geradlinige Form haben, können die Spulenstirnseiten geradlinig oder gebogen ausgebildet sein und beispielsweise auch einen Teil- oder Halbkreis bilden. Die Spulen haben vor dem Umbiegen in der Regel im Wesentlichen eine insgesamt flache Form.

Bevorzugt beträgt die Drehbewegung der Spulenlängsseiten beim Umbiegen ungefähr 90°. Eine Drehbewegung von ungefähr 90° ist bei den üblichen Spulen mit rechteckigem Querschnitt der Spulenlängs- und Spulenstirnseiten vorteilhaft, da dann die Aussenflächen der beiden Spulenlängsseiten nach dem Umbiegen wiederum parallel zueinander angeordnet sind, und die Spule dadurch in die Längsnuten eines üblichen Kerns eingesetzt werden kann.

Um einen hohen Füllgrad des Stators bzw. Rotors zu erreichen, werden die Spulen in der Regel jeweils durch einen oder mehrere Flachdrähte mit insbesondere jeweils rechteckigem Querschnitt gebildet. Die Flachdrähte stehen vor dem Umbiegevorgang üblicherweise jeweils hochkant in der Spulenebene, so dass sie nach dem Umbiegen in den Bereichen der Spulenlängsseiten jeweils flach in den Längsnuten des Kerns zu liegen kommen.

Vorzugsweise weisen die Spulen im Querschnitt jeweils mehrere Schichten von Flachdrähten auf, wobei die Flachdrähte benachbarter Schichten jeweils mit ihren Schmalseiten aneinander anliegen. Die Schmalseiten sind diejenigen Aussenflächen eines Flachdrahtes, welche die beiden Flachseiten des Flachdrahtes miteinander verbinden, und welche im Vergleich zu den Flachseiten schmaler ausgebildet sind und eine geringere Fläche haben. Vor dem Umbiegen sind die Schichten in der Regel senkrecht zu der durch die Spulenöffnung definierten Spulenebene übereinander angeordnet, d.h. die Spulenöffnung ist von den Flachdrähten hochkant umgeben. Die Flachdrähte sind vor dem Umbiegen mit anderen Worten also jeweils hochkant zur Spulenebene und in mehreren Schichten übereinander angeordnet. Nach dem Umbiegen der Spule werden sie dann in der Regel derart in den Kern eingesetzt, dass sie flach in dessen Längsnuten zu liegen kommen. Bevorzugt weist jede Schicht mehrere Flachdrähte auf, welche jeweils mit ihren Flachseiten aneinander anliegen.

Bevorzugt werden die Spulen jeweils derart bereitgestellt, dass die verschiedenen Schichten von Flachdrähten in den Bereichen der Spulenstirnseiten jeweils unterschiedliche Längen aufweisen, so dass die Schichten nach dem Umbiegen jeweils in den Bereichen der Spulenstirnseiten eng aneinander anliegen. Auf diese Weise können die unterschiedlichen Biegeradien der verschiedenen Schichten beim Umbiegen ausgeglichen werden. Die Spulenstirnseiten der bereitgestellten Spulen können somit für verschiedene Schichten unterschiedlich ausgestaltet sein.

Je nach Typ der elektrischen Maschine können die Spulen zum Beispiel derart in die Längsnuten des Kerns eingesetzt werden, dass in jeder Längsnut genau eine Spulenlängsseite aufgenommen ist. Die Längsnuten haben dann in der Regel im Wesentlichen dieselbe Dimensionierung wie die Spulenlängsseiten. Die Spulen können aber auch derart in die Längsnuten eingesetzt werden, dass in jeder Längsnut genau zwei Spulenlängsseiten aufgenommen sind. Vorteilhaft werden die Spulen dabei derart in die Längsnuten des Kerns eingesetzt, dass sich die Spulen einander jeweils nicht überlappen.

Bei gewissen Typen von elektrischen Maschinen kann es aber auch vorteilhaft sein, wenn die Spulen derart in die Längsnuten des Kerns eingesetzt werden, dass sich jeweils zwei oder mehr, insbesondere genau drei, Spulen überlappen. Bevorzugt bilden die Spulen dabei Gruppen von mehreren einander sich überlappenden Spulen, wobei sich die Spulen unterschiedlicher Gruppen aber jeweils nicht überlappen. Auf diese Weise kann der Stator bzw. Rotor eines solchen Typs einer elektrischen Maschine besonders einfach segmentweise hergestellt und transportiert werden. Die einander überlappenden Spulen können derart bereitgestellt und umgebogen werden, dass beim Umbiegen der Spulen jeweils Spulenköpfe entstehen, welche sich bei allen Spulen im Wesentlichen gleich weit in eine ungefähr senkrecht zu den Spulenlängsseiten stehende Richtung erstrecken. Die Herstellung vereinfacht sich dadurch insbesondere in Bezug auf den Umbiegevorgang der verschiedenen Spulen. Die Spulen können aber auch derart bereitgestellt werden, dass die Gesamtlänge aller Flachdrähte pro Spule für alle Spulen im Wesentlichen gleich gross ist, so dass beim Umbiegen der Spulen Spulenköpfe entstehen, welche sich bei verschiedenen Spulen unterschiedlich weit in eine ungefähr senkrecht zu den Spulenlängsseiten stehende Richtung erstrecken. Die verschiedenen Spulen eines Stators bzw. Rotors werden dadurch gleichmässig belastet.

Um zu verhindern, dass sich die Spulenköpfe gegenseitig in die Quere kommen, werden die Spulenlängsseiten vorteilhaft derart in die Längsnuten des Kerns eingesetzt, dass sich die abgebogenen, durch das Umbiegen entstandenen Spulenköpfe der verschiedenen Spulen jeweils in eine radial nach aussen hin weisende Richtung erstrecken.

Die Erfindung betrifft ausserdem ein Stator- oder Rotorelement einer elektrischen Maschine, welches insbesondere gemäss einem Verfahren wie angegeben hergestellt ist. Das Stator- oder Rotorelement weist einen Kern mit Längsnuten auf sowie Spulen mit jeweils zwei Spulenlängsseiten und zwei Spulenköpfen, welche jeweils mit Isolationsband umwickelt sind und gemeinsam eine Spulenöffnung begrenzen. Die Spulenlängsseiten sind derart in die Längsnuten des Kerns eingesetzt, dass in jeder Längsnut des Kerns zumindest eine Spulenlängsseite von einer dieser Spulen aufgenommen ist. Die Spulenköpfe sind jeweils in eine ungefähr senkrecht zu den Spulenlängsseiten stehende Richtung abgebogen.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigen:
- Fig. 1a: eine perspektivische Ansicht einer zur Umwicklung mit einem Isolationsband in einer Isolationsmaschine gehaltenen Spule, gemäss einer erfindungsgemässen Ausführungsform;
- Fig. 1b: eine perspektivische Teilansicht der in der Fig. 1a gezeigten, teilweise umwickelten Spule;
- Fig. 2: eine perspektivische Ansicht einer Spule, vor und nach dem erfindungsgemässen Umbiegevorgang;
- Fig. 3a: eine perspektivische Ansicht einer teilweise aufgeschnittenen Spule, nach Durchführen des erfindungsgemässen Umbiegevorgangs;
- Fig. 3b: eine Detailansicht des in der Fig. 3a gestrichelt markierten Bereichs;
- Fig. 4a: eine seitliche Ansicht einer im erfindungsgemässen Verfahren verwendeten Spule mit vier Schichten von Flachdrähten, vor dem Umbiegevorgang;
- Fig. 4b: eine Ansicht von oben auf die in der Fig. 4a gezeigte Spule;
- Fig. 4c: eine Ansicht von oben auf die oberste Schicht von Flachdrähten der in der Fig. 4a gezeigten Spule;
- Fig. 4d: eine Ansicht von oben auf die zweitoberste Schicht von Flachdrähten der in der Fig. 4a gezeigten Spule;
- Fig. 4e: eine Ansicht von oben auf die zweitunterste Schicht von Flachdrähten der in der Fig. 4a gezeigten Spule;
- Fig. 4f: eine Ansicht von oben auf die unterste Schicht von Flachdrähten der in der Fig. 4a gezeigten Spule;
- Fig. 5a: eine seitliche Ansicht auf eine Längsseite der in der Fig. 4a gezeigten Spule, nach dem Umbiegevorgang;
- Fig. 5b: eine Ansicht von oben auf die in der Fig. 5a gezeigte Spule;
- Fig. 5c: eine seitliche Ansicht auf eine Stirnseite der in der Fig. 5a gezeigten Spule;
- Fig. 5d: eine Querschnittsansicht einer Längsseite der in der Fig. 5a gezeigten Spule;
- Fig. 6: eine perspektivische Ansicht eines teilweise aufgeschnittenen Stators gemäss einer ersten erfindungsgemässen Ausführungsform, welcher einen Kern mit Längsnuten und darin eingesetzte, einander nicht überlappende Spulen aufweist, mit jeweils einer einzigen Spulenlängsseite pro Längsnut;
- Fig.7: eine perspektivische Ansicht eines teilweise aufgeschnittenen Stators gemäss einer zweiten erfindungsgemässen Ausführungsform, welcher einen Kern mit Längsnuten und darin eingesetzte, einander nicht überlappende Spulen aufweist, mit jeweils zwei Spulenlängsseiten pro Längsnut;
- Fig.8: eine perspektivische Ansicht eines teilweise aufgeschnittenen Stators gemäss einer dritten erfindungsgemässen Ausführungsform, welcher einen Kern mit Längsnuten und darin eingesetzte, einander überlappende Spulen aufweist, mit in radialer Richtung unterschiedlich langen Spulenköpfen; sowie
- Fig.9: eine perspektivische Ansicht eines teilweise aufgeschnittenen Stators gemäss einer vierten erfindungsgemässen Ausführungsform, welcher einen Kern mit Längsnuten und darin eingesetzte, einander überlappende Spulen aufweist, mit in radialer Richtung jeweils gleich langen Spulenköpfen.

### BESCHREIBUNG BEVORZUGTER AUSFÜHRUNGSFORMEN

Gleich oder ähnlich wirkende Elemente unterschiedlicher Ausführungsformen werden im Folgenden jeweils mit denselben Bezugszeichen gekennzeichnet.

Die Figuren 1a bis 2 zeigen Verfahrensschritte bei der Durchführung des erfindungsgemässen Verfahrens.

Die Figur 1a zeigt eine in einer nur teilweise dargestellten Isolationsmaschine gehaltene Spule 3 während der Umwicklung mit einem in der Figur nicht erkennbaren Isolationsband. Die Spule hat eine insgesamt im Wesentlichen flache, rechteckige Form mit zwei Längsseiten 33 und zwei Stirnseiten 32. Die Längsseiten 33 und Stirnseiten 32 sind in den Eckbereichen der rechteckigen Form jeweils via einen Krümmungsbereich 39 von 90° miteinander verbunden. Die Spule 3 bildet eine geschlossene, eine Spulenebene definierende Schleife mit einer Spulenöffnung 34, welche seitlich umlaufend von den Längsseiten 33 und den Stirnseiten 32 begrenzt ist.

Die Längsseiten 33, die Stirnseiten 32 sowie die dazwischen angeordneten Krümmungsbereiche 39 der Spule 3 weisen jeweils eine Querschnittsfläche in der Form eines Rechtecks mit zwei langen und zwei breiten Seiten auf. Die Querschnittsfläche steht in den Bereichen der Längsseiten 33, der Stirnseiten 32 sowie der Krümmungsbereiche 39 jeweils derart senkrecht zur Spulenebene, dass sich die beiden langen Seiten dieses Rechtecks jeweils im Wesentlichen entlang der Spulenebene erstrecken, während die beiden breiten Seiten im Wesentlichen senkrecht zur Spulenebene stehen.

Wie es aus der Figur 1b ersichtlich ist, sind im Inneren der Spule 3 mehrere Flachdrähte 35 mit jeweils rechteckigem Querschnitt dicht aneinander angeordnet. Bei den Flachdrähten 35 handelt es sich insbesondere um Kupferdrähte. Je nach Anwendung können aber zum Beispiel auch Aluminiumdrähte verwendet werden. Die Flachdrähte 35 sind in der in der Figur 1a gezeigten Situation, also vor dem Umbiegevorgang, derart in der Spule 3 angeordnet, dass sie jeweils hochkant in der Spulenebene stehen. In Bezug auf ihre Längs- bzw. Breiterstreckung, stehen die rechteckigen Querschnittsflächen der individuellen Flachdrähte 35 somit jeweils senkrecht zur rechteckigen Querschnittsfläche, welche in den Bereichen der Längsseiten 33, der Stirnseiten 32 sowie der Krümmungsbereiche 39 durch alle Flachdrähte 25 gemeinsam gebildet wird. Wie es aus der Figur 1b ersichtlich ist, weist die Spule 3 im vorliegenden Fall zwei Schichten 36 von jeweils neun Flachdrähten 35 auf. Innerhalb einer Schicht 36 liegen die neun Flachdrähte 36 jeweils mit ihren Flachseiten aneinander an. Benachbarte Flachdrähte 35 unterschiedlicher Schichten 36 stehen jeweils hochkant aufeinander, das heisst die Schmalseiten der Flachdrähte 35 liegen aneinander an. Aufgrund der Vielzahl von Flachdrähten 35 pro Schicht 36 haben die Spulenlängsseiten 33 bzw. Spulenstirnseiten 32 der Spule 3 entlang der Spulenebene jeweils eine um ein Vielfaches grössere Ausdehnung als senkrecht dazu. Insgesamt weist die Spule 3 in der vorliegenden Ausführungsform somit 18 Flachdrähte 35 auf, die in der Isolationsmaschine gemeinsam mit einem Isolationsband 38 umwickelt werden.

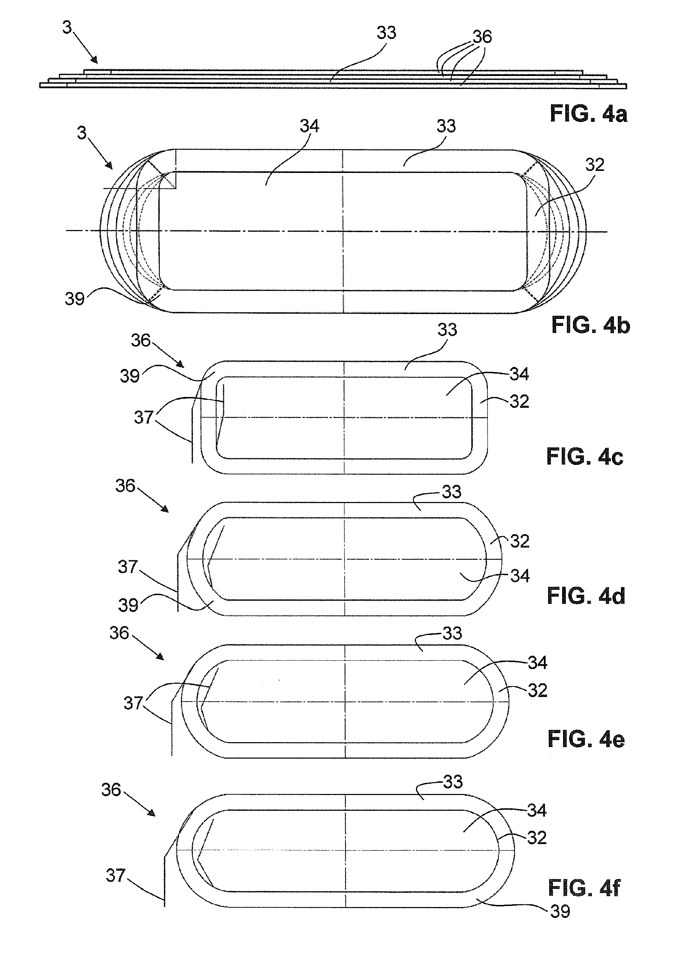

Die Spule 3 ist während des Isolationsvorgangs in einer in der Figur 1 nicht gezeigten Halterung gehalten. Mittels der Isolationsmaschine werden zumindest die Längsseiten 33 der Spule 3 weitgehend vollautomatisch mit einem Isolationsband umwickelt. Aufgrund der verhältnismässig breiten Spulenöffnung 34 ist eine schnelle und qualitativ hochwertige Umwicklung der Spulenlängsseiten 33 mit Isolationsband mit Hilfe der Isolationsmaschine problemlos möglich. Da die Spulenlängsseiten 33 später in den Längsnuten 43 des Eisenkerns 41 des Stators 4 zu liegen kommen (siehe Figuren 4 bis 7), ist für diese eine Umwicklung mit hoher Qualität besonders wichtig.

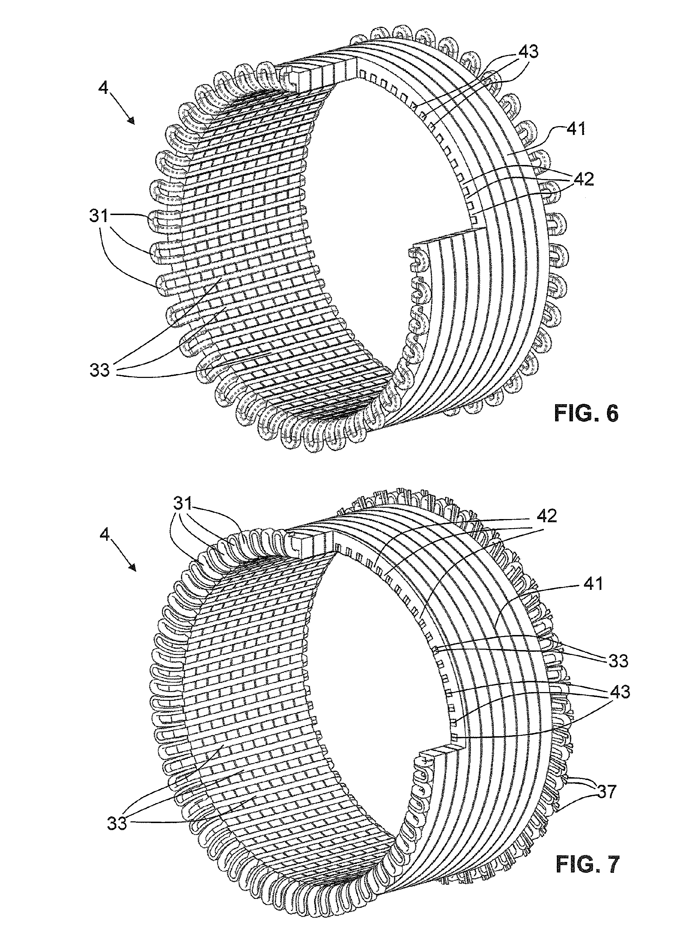

Die aufgrund ihrer Geometrie schwieriger zu umwickelnden Krümmungsbereiche 39 können, falls die Isolationsmaschine dazu fähig ist, ebenfalls maschinell isoliert werden, oder sie können anschliessend an die maschinelle Umwicklung der Längsseiten 33 manuell isoliert werden. Dasselbe gilt für die Spulenstirnseiten 32, welche bei dem in der Figur 2 gezeigten und weiter unten beschriebenen Umbiegevorgang verformt werden. Auch diese können, bevorzugt nach dem Umbiegevorgang, zum Beispiel mit einer Spezialmaschine, maschinell oder von Hand isoliert werden. Da die Krümmungsbereiche 39 und die Spulenstirnseiten 32 ausserhalb des Eisenkerns 41 des Stators 4 zu liegen kommen (Figuren 6 bis 9), ist für diese eine Isolation mit einer im Vergleich zu den Spulenlängsseiten 33 verminderter Qualität ausreichend.

Während des in der Figur 1a gezeigten Isolationsvorgangs durchragt die Spule 3 mit einer ihrer Längsseiten 33 einen Wickelring 1 der Isolationsmaschine. Der kreisförmige Wickelring 1 umgibt die Längsseite 33 dabei vollständig. Am Wickelring 1 sind Bandrollen 11 und 12 angebracht, welche im Wesentlichen frei drehbar sind. Für den Umwicklungsvorgang wird das in der Bandrolle 11 gelagerte Isolationsband an der Aussenseite der den Wickelring 1 durchragenden Spulenlängsseite 33 befestigt. Ebenso wird das Isolationsband der Bandrolle 12 an der Aussenseite derselben Spulenlängsseite 33 befestigt. Für die Umwicklung wird der Wickelring 1 dann um die Spulenlängsseite 33 gedreht und kontinuierlich entlang dieser fortbewegt. Für den Antrieb des Wickelrings 1 ist ein Antriebsmotor 2 vorgesehen. Während sich der Wickelring 1 um die Spulenlängsseite 33 dreht, wird Isolationsband von den Bandrollen 11 und 12 abgerollt. Die Bandrollen 11, 12 werden während der Rotation des Wickelrings 1 durch die Spulenöffnung 34 hindurch geführt. Der Umwicklungsvorgang der Spule 3 mit Hilfe einer Isolationsmaschine des Standes der Technik mit Wickelring 1, wie in der Figur 1a gezeigt, ist dem Fachmann hinlänglich bekannt.

Anschliessend an den Umwicklungsvorgang wird die Spule 3 in einem weiteren, in der Figur 2 gezeigten Verfahrensschritt in ihre endgültige Form umgebogen (Spule 3'). Dabei werden die beiden Spulenstirnseiten 32 jeweils derart um ca. 180° verbogen, dass die beiden Spulenlängsseiten 33 entlang der Biegerichtung a um ca. 90° zueinander hin bewegt werden. Dazu wird eine beliebige aus dem Stand der Technik bekannte Biegevorrichtung verwendet.

In der Figur 2 ist gut erkennbar, dass die Spulenlängsseiten 33 durch den Umbiegevorgang in einem deutlich verkleinerten Abstand zueinander zu liegen kommen. Die Spulenöffnung 34 wird in die sich senkrecht zur Längsrichtung der Spulenlängsseiten 33 erstreckende Richtung um mehr als die Hälfte verkleinert. Die Spulenlängsseiten 33 stehen nach dem Umbiegen hochkant nebeneinander und werden an ihren Enden durch jeweils einen bogenförmigen Spulenkopf 31, der von jeweils einer Spulenstirnseite 32 gebildet wird, miteinander verbunden. Die beim Umbiegevorgang gebildeten Spulenköpfe 31 ragen via die Krümmungsbereiche 39 senkrecht von den Spulenlängsseiten 33 in dieselbe Richtung ab.

Wie aus der Figur 3a und insbesondere der Figur 3b erkennbar ist, liegen die Flachdrähte 35 im Bereich der Spulenlängsseiten 33 nach dem Umbiegevorgang jeweils flach in der durch die Spulenöffnung 34 definierten Spulenebene, d.h. die Flachseiten der Flachdrähte 35 sind im Wesentlichen parallel zur Spulenebene angeordnet.

Im Bereich eines der Spulenköpfe 31 sind zwei nicht isolierte Anschlussenden 37 vorhanden, welche zum Anschliessen der Spule 3' an weitere Spulen oder zum Zu- bzw. Abführen des Stromes (je nachdem ob die Spule 3' in einem Generator oder in einem Motor zum Einsatz kommt) dienen. Die Anschlussenden 37 werden jeweils durch die zwei nebeneinander angeordneten Flachdrähte 35 der obersten bzw. untersten Schicht 36 gebildet.

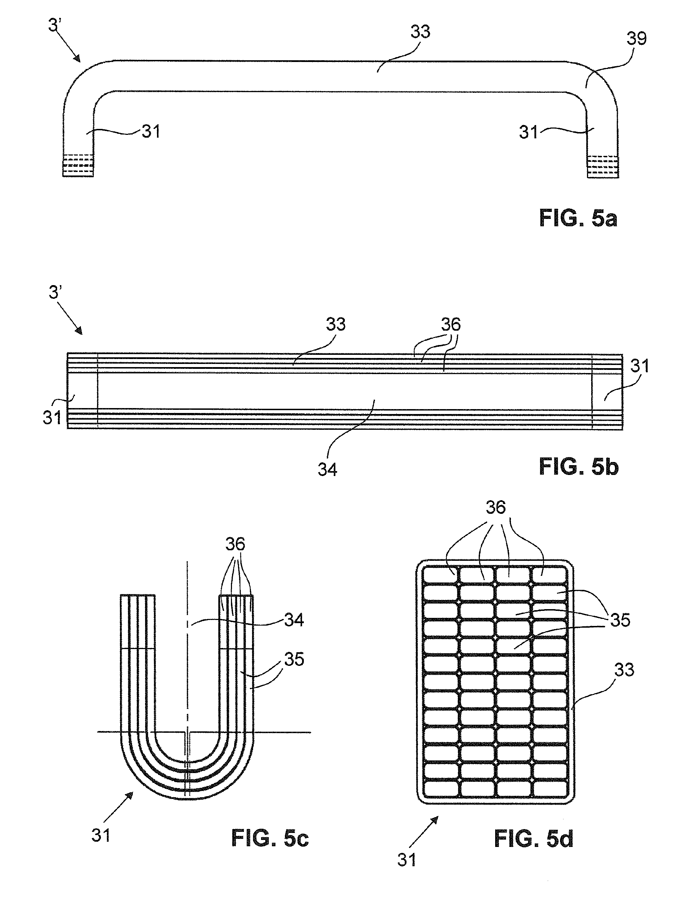

Um zu gewährleisten, dass sich die Spule 3 beim Umbiegen aufgrund der unterschiedlichen Biegeradien der Schichten 36 nicht verzieht, weisen die verschiedenen Schichten 36 von Flachdrähten 35 in den Bereichen der Spulenstirnseiten 32 jeweils unterschiedliche Längen auf. Die unterschiedlichen Längen und Ausgestaltungen vor dem Umbiegen der Schichten 36 in den Bereichen der Spulenstirnseiten 32 werden in den Figuren 4a bis 4f für eine Spule 3 mit vier Schichten 36 veranschaulicht. Die Ausgestaltung der durch Umbiegen der Spule 3 entstandenen Spule 3' ist in den Figuren 5a bis 5d gezeigt. Wie aus der Figur 5d ersichtlich ist, weist die Spule 3 bzw. 3' pro Schicht 36 jeweils 13 Flachdrähte 35 auf.

Die in der Seitenansicht der Figur 4a zuoberst angeordnete Schicht 36 ist beim Umbiegevorgang auf derjenigen Seite der Spule 3 angeordnet, zu welcher die beiden Spulenlängsseiten 33 hinbewegt werden. Diese in der Figur 4a zuoberst angeordnete Schicht (welche in der Ansicht der Figur 2 der zuunterst angeordneten Schicht entsprechen würde) weist nach dem Umbiegen im Bereich ihrer Spulenköpfe 31 somit den jeweils kleinsten Biegeradius aller Schichten 36 auf.

Wie es insbesondere aus der Figur 5c ersichtlich ist, haben die Spulenstirnseiten 32 der in der Ansicht der Figur 4a weiter unten angeordneten Schichten 36 beim Umbiegen einen im Vergleich zur obersten Schicht 36 grösseren Biegeradius. Aus diesem Grund erstrecken sich die Spulenstirnseiten 32 dieser Schichten 36 mit grösserem Biegeradius im Gegensatz zu den Spulenstirnseiten 32 der obersten Schicht 36 nicht geradlinig zwischen den jeweiligen Krümmungsbereichen 39, sondern sind relativ zur Spulenöffnung 34 nach aussen hin gebogen. Je weiter unten in der Ansicht der Figur 4a eine Schicht 36 angeordnet ist, desto weiter sind ihre Spulenstirnseiten 32 in Längsrichtung der Spule 3 nach aussen hin gebogen. Die gebogen ausgebildeten und somit eine grössere Länge aufweisenden Spulenstirnseiten 32 der weiter unten angeordneten Schichten 36 kompensieren die längeren Biegeradien dieser Schichten 36 im Vergleich zur obersten Schicht 36. Beim Umbiegen werden die gebogenen Spulenstirnseiten 32 der unteren Schichten 36 zur geradlinig ausgestalteten Spulenstirnseite 32 der obersten Schicht 36 hingezogen bis sie sich parallel zu dieser erstrecken.

Nachdem die Spulen 3 bzw. 3' mit Isolationsband 38 umwickelt und umgebogen worden sind, werden sie in Längsnuten 43 eines Eisenkerns 41 eingesetzt, siehe die Figuren 6 bis 9. Der Eisenkern 41 ist meist Teil des Stators eines elektrischen Motors oder Generators und bildet zusammen mit den Spulen 3' ein Statorelement. Es ist aber auch möglich, dass der Eisenkern 41 Teil des Rotors ist und dann zusammen mit den Spulen 3' ein Rotorelement bildet. Der Eisenkern 41 weist eine im Wesentlichen zylindrische Form auf. Auf seiner radialen Innenseite ist eine Vielzahl von Längsnuten 43 ausgebildet, welche entlang der Umfangsrichtung in regelmässigen Abständen parallel zueinander angeordnet sind und sich jeweils über die gesamte axiale Länge des Eisenkerns 41 erstrecken. Entlang der Umfangsrichtung des Eisenkerns 41 werden die Längsnuten 43 durch dazwischen angeordnete Zähne 42 begrenzt. Die Längsnuten 43 haben in einer senkrecht zu ihrer Längsrichtung stehenden Querschnittsansicht jeweils eine rechteckige Form.

Zur Reduktion von unerwünschten Wirbelströmen weist der Eisenkern 41 üblicherweise eine Vielzahl von übereinander geschichteten und gegenseitig isolierten Blechen auf. Das Material des Kerns 41 kann insbesondere ein Trafoblech oder ein beliebiges anderes magnetisch leitendes Material sein. Die Herstellung und Ausgestaltung des Kerns 41 ist dem Fachmann aus dem Stand der Technik hinlänglich bekannt.

Die Spulen 3' werden jeweils derart in die Längsnuten 43 des Eisenkerns 41 eingesetzt, dass die in ihren Spulenlängsseiten 33 enthaltenen Flachdrähte 25 jeweils flach in den Längsnuten 43 zu liegen kommen. Nach dem Einsetzen der Spulen 3' in den Eisenkern 41, sind die Längsnuten 43 im Wesentlichen vollständig mit Flachdrähten 25 ausgefüllt. Die Spulenköpfe 31 ragen jeweils unmittelbar anschliessend an die jeweiligen Enden der Längsnuten 43 radial nach aussen hin und kommen sich dadurch gegenseitig nicht in die Quere.

Entlang der Umfangsrichtung des Eisenkerns 41 haben die Längsnuten 43 der in den Figuren 6 und 7 gezeigten Eisenkerne 41 jeweils ungefähr dieselbe Breite wie die dazwischen angeordneten Zähne 42. Weder bei der Ausführungsform der Figur 6 noch bei derjenigen der Figur 7 überlappen sich die Spulen 3' gegenseitig entlang der Umfangsrichtung des Eisenkerns 41. Bei beiden in diesen Figuren gezeigten Ausführungsformen umgibt eine einzelne Spule 3' jeweils einen Zahn 42. Um das Hineinragen eines Zahnes 42 zu ermöglichen, und um gleichzeitig den Luftraum zwischen dem Eisenkern 41 und den Spulen 3' zu minimieren, ist einerseits die Breite der Spulenöffnung 34 im Bereich der Spulenlängsseiten 33 nur geringfügig grösser als die Breite der Zähne 42, und andererseits die in die radiale Richtung des Eisenkerns 41 gemessene Tiefe der Längsnuten 43 im Wesentlichen gleich gross wie die in die analoge Richtung gemessene Höhe der Spulenlängsseiten 33.

Bei der in der Figur 6 gezeigten Ausführungsform wird in jede Längsnut 43 des Eisenkerns 41 jeweils eine einzelne Spulenlängsseite 33 einer Spule 3' eingesetzt. Die Längsnuten 43 sind somit jeweils nur geringfügig breiter als die Spulenlängsseiten 33. Alternierend ragt entlang der Umfangsrichtung des Eisenkerns 41 jeweils ein Zahn 42 in eine Spulenöffnung 34 einer Spule 3' hinein oder ist derart zwischen zwei Spulen 3' angeordnet, dass keine der Spulen 3' ihn umläuft.

Bei der in der Figur 7 gezeigten Ausführungsform werden in jede Längsnut 43 des Eisenkerns 41 jeweils die Spulenlängsseiten 33 zweier benachbarter Spulen 3' eingesetzt. Die Längsnuten 43 sind daher jeweils ungefähr doppelt so breit ausgebildet wie eine einzelne Spulenlängsseite 33. Benachbarte Spulen 3' liegen in Umfangsrichtung in den Längsnuten 43 jeweils direkt aneinander an. Bei dieser Ausführungsform füllt somit jeder der Zähne 42 des Eisenkerns 41 eine Spulenöffnung 34 von jeweils einer Spule 3' im Bereich der Spulenlängsseiten 33 aus.

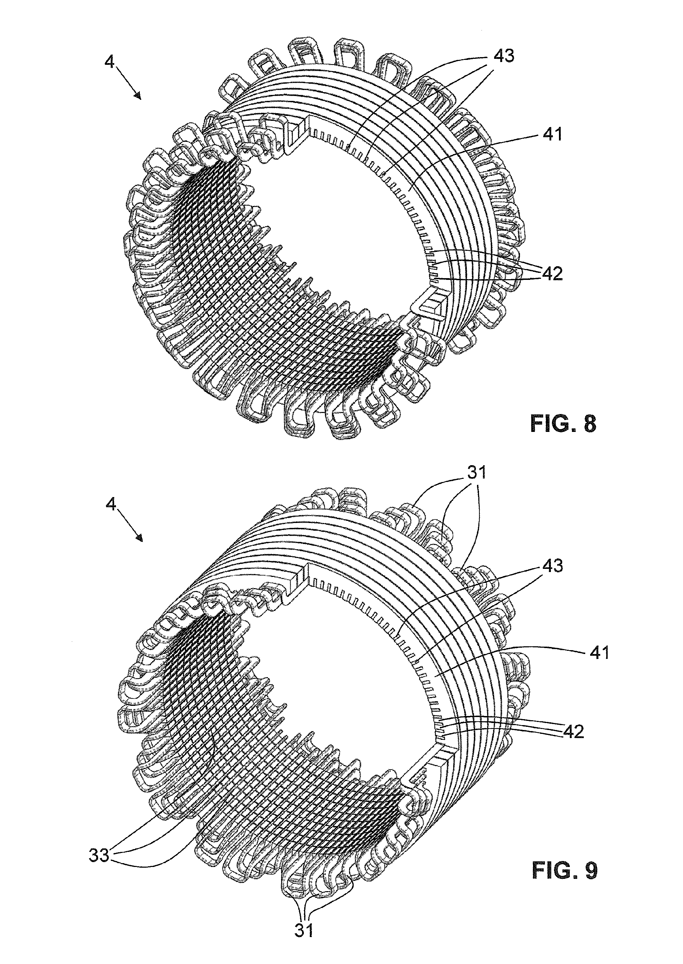

Bei den Ausführungsformen der Figuren 8 und 9 werden die Spulen 3' derart in den Eisenkern 41 eingesetzt, dass entlang der Umfangsrichtung Gruppen von jeweils drei sich gegenseitig überlappenden Spulen 3' angeordnet sind. Da sich die Spulen 3' von benachbarten Gruppen gegenseitig aber nicht überlappen, kann der Stator auch segmentweise, d.h. in Umfangsrichtung in mehrere Statorelemente aufgeteilt, hergestellt werden, um dann erst am endgültigen Einsatzort zusammengesetzt zu werden, ohne dass bei der Montage am Einsatzort Spulen 3' aus den Längsnuten 43 herausgenommen und wieder in den Eisenkern 41 eingesetzt werden müssen. Jeder der Spulen 3' umgibt jeweils mehrere, hier drei, Zähne 42 des Eisenkerns 41. In jede der Längsnuten 43 ist jeweils eine einzelne Spulenlängsseite 33 eingesetzt. Um in den Bereichen der Spulenköpfe 31 einander gegenseitig nicht in die Quere zu kommen, ragen die einander überlappenden Spulen 3' jeder Gruppe jeweils unterschiedlich weit in die axiale Richtung bzw. in die Längsrichtung aus den Längsnuten 43 heraus. Die Spulenlängsseiten 33 von verschiedenen Spulen 3' sind somit unterschiedlich lang. Bei den in den Figuren 8 und 9 gezeigten Ausführungsformen mit jeweils drei sich überlappenden Spulen 3' müssen somit jeweils drei Sätze von Spulen 3' mit unterschiedlichen Längen hergestellt werden.

Die in den Figuren 8 und 9 gezeigten Statoren (oder Rotoren) unterscheiden sich dadurch voneinander, dass die Spulenköpfe 31 der verschiedenen Spulen 3' bei der Ausführungsform der Figur 8 unterschiedlich weit von den Spulenlängsseiten 33 in die radiale Richtung nach aussen ragen. Das Spulendesign wurde hier derart optimiert, dass die Gesamtlänge aller Flachdrähte 35, welche in einer Spule 3' vorhanden sind, für sämtliche Spulen 3' im Wesentlichen gleich gross ist. Die einzelnen Spulen 3' werden dadurch im Betrieb alle gleich stark belastet.

Bei der in der Figur 9 gezeigten Ausführungsform ragen die drei einander überlappenden Spulen 3' jeweils gleich weit mit ihren Spulenköpfen 31 von den Spulenlängsseiten 33 in die radiale Richtung. Die einzelnen Spulen 3' weisen dadurch zwar unterschiedliche Gesamtlängen bzgl. ihrer Flachdrähte 35 auf. Dafür ist die Herstellung, insbesondere was den Umbiegevorgang angeht, einfacher, da die Spulen 3 vor dem Umbiegevorgang jeweils alle dieselbe Breite bzgl. ihrer Spulenstirnseiten 32 aufweisen und sich nur bzgl. der Länge ihrer Spulenlängsseiten 33 voneinander unterscheiden.

**BEZUGSZEICHENLISTE**

| | | | |
|---|---|---|---|
| 1 | Wickelring | 36 | Schicht |
| 11, 12 | Bandrolle | 37 | Anschlussende |
| | | 38 | Isolation |
| 2 | Antriebsmotor | 39 | Krümmungsbereich |
| | | | |
| 3, 3' | Spule | 4 | Stator |
| 31 | Spulenkopf | 41 | Kern |
| 32 | Spulenstirnseite | 42 | Zahn |
| 33 | Spulenlängsseite | 43 | Längsnut |
| 34 | Spulenöffnung | | |
| 35 | Flachdraht | a | Biegerichtung |

## Patentansprüche

1. Verfahren zur Herstellung eines Stator- oder Rotorelements für eine elektrische Maschine, welches einen Kern (41) mit Längsnuten (43) aufweist, in welche jeweils zumindest eine Spulenlängsseite (33) einer Spule (3') eingesetzt ist, wobei das Verfahren zumindest die folgenden Schritte umfasst:
- Bereitstellen von Spulen (3) mit jeweils zwei Spulenlängsseiten (33) und zwei Spulenstirnseiten (32), die gemeinsam eine Spulenöffnung (34) begrenzen;
- Umwickeln der Spulenlängsseiten (33) mit Isolationsband (38);
- Einsetzen der Spulenlängsseiten (33) dieser Spulen (3') in die Längsnuten (43) des Kerns (41) derart, dass in jeder Längsnut (43) zumindest eine Spulenlängsseite (33) von einer dieser Spulen (3) aufgenommen ist;
**dadurch gekennzeichnet, dass**
die Spulen (3) nach dem Umwickeln ihrer Spulenlängsseiten (33) mit Isolationsband (38) und vor dem Einsetzen in die Längsnuten (43) des Kerns (41) jeweils derart im Bereich ihrer Spulenstirnseiten (32) umgebogen werden, dass sich die beiden Spulenlängsseiten (33) jeweils via eine Drehbewegung einander annähern.

2. Verfahren nach Anspruch 1, wobei die Drehbewegung der Spulenlängsseiten (33) beim Umbiegen ungefähr 90° beträgt.

3. Verfahren nach Anspruch 1 oder 2, wobei die Spulen (3) jeweils durch einen oder mehrere Flachdrähte (35) mit insbesondere rechteckigem Querschnitt gebildet werden.

4. Verfahren nach Anspruch 3, wobei die Spulen (3) im Querschnitt jeweils mehrere Schichten (36) von Flachdrähten (35) aufweisen, und wobei die Flachdrähte (35) benachbarter Schichten (36) jeweils mit ihren Schmalseiten aneinander anliegen.

5. Verfahren nach Anspruch 4, wobei jede Schicht (36) mehrere Flachdrähte (35) aufweist, welche jeweils mit ihren Flachseiten aneinander anliegen.

6. Verfahren nach Anspruch 4 oder 5, wobei die Spulen (3) jeweils derart bereitgestellt werden, dass die verschiedenen Schichten (36) von Flachdrähten (35) in den Bereichen der Spulenstirnseiten (32) jeweils unterschiedliche Längen aufweisen, so dass die Schichten (36) nach dem Umbiegen jeweils in den Bereichen der Spulenstirnseiten (32) eng aneinander anliegen.

7. Verfahren nach einem der Ansprüche 3 bis 6, wobei die Spulen (3) vor dem Umwickeln und Umbiegen jeweils derart bereitgestellt werden, dass die Spulenöffnung (34) von den Flachdrähten (35) hochkant umgeben ist.

8. Verfahren nach einem der vorhergehenden Ansprüche, wobei die Spulen (3') derart in die Längsnuten (43) des Kerns (41) eingesetzt werden, dass in jeder Längsnut (43) genau eine Spulenlängsseite (33) aufgenommen ist.

9. Verfahren nach einem der vorhergehenden Ansprüche, wobei die Spulen (3') derart in die Längsnuten (43) des Kerns (4) eingesetzt werden, dass in jeder Längsnut (43) genau zwei Spulenlängsseiten (33) aufgenommen sind.

10. Verfahren nach einem der vorhergehenden Ansprüche, wobei die Spulen (3') derart in die Längsnuten (43) des Kerns (4) eingesetzt werden, dass sich die Spulen (3') einander jeweils nicht überlappen.

11. Verfahren nach einem der vorhergehenden Ansprüche, wobei die Spulen (3') derart in die Längsnuten (43) des Kerns (4) eingesetzt werden, dass sich jeweils zwei oder mehr Spulen (3') überlappen.

12. Verfahren nach Anspruch 11, wobei die Spulen (3) derart bereitgestellt und umgebogen werden, dass beim Umbiegen der Spulen (3) jeweils Spulenköpfe (31) entstehen, welche sich bei allen Spulen (3') im Wesentlichen gleich weit in eine ungefähr senkrecht zu den Spulenlängsseiten (33) stehende Richtung erstrecken.

13. Verfahren nach Anspruch 11, wobei die Spulen (3) jeweils durch einen oder mehrere Flachdrähte (35) gebildet werden, und wobei die Spulen (3) derart bereitgestellt werden, dass die Gesamtlänge aller Flachdrähte (35) pro Spule für alle Spulen (3) im Wesentlichen gleich gross ist, so dass beim Umbiegen der Spulen (3) Spulenköpfe (31) entstehen, welche sich bei verschiedenen Spulen (3') unterschiedlich weit in eine ungefähr senkrecht zu den Spulenlängsseiten (33) stehende Richtung erstrecken.

14. Verfahren nach einem der vorhergehenden Ansprüche, wobei die Spulenlängsseiten (33) derart in die Längsnuten (43) des Kerns (41) eingesetzt werden, dass sich die abgebogenen, durch das Umbiegen entstandenen Spulenköpfe (31) der verschiedenen Spulen (3`) jeweils in eine radial nach aussen hin weisende Richtung erstrecken.

15. Stator- oder Rotorelement einer elektrischen Maschine, insbesondere hergestellt gemäss einem Verfahren nach einem der vorhergehenden Ansprüche, aufweisend
einen Kern (41) mit Längsnuten (43), sowie
Spulen (3') mit jeweils zwei Spulenlängsseiten (33) und zwei Spulenköpfen (31), welche jeweils mit Isolationsband umwickelt sind und gemeinsam eine Spulenöffnung (34) begrenzen, wobei die Spulenlängsseiten (33) derart in die Längsnuten (43) des Kerns (41) eingesetzt sind, dass in jeder Längsnut (43) des Kerns (41) zumindest eine Spulenlängsseite (33) von einer dieser Spulen aufgenommen ist,
**dadurch gekennzeichnet, dass**
die Spulenköpfe (31) jeweils in eine ungefähr senkrecht zu den Spulenlängsseiten (33) stehende Richtung abgebogen sind.
